# EUROPEAN PATENT SPECIFICATION

(11) **EP 1 681 882 B1**
(45) Date of publication and mention of the grant of the patent: **15.03.2017**
(21) Application number: 06090002.4
(22) Date of filing: 04.01.2006
(51) Int. Cl.: H04W 76/00, H04W 4/10

(54) **Commmunication method and communication system to enable sending a message during a Push-To-Talk connection**
Kommunikationsverfahren und -system zur Übertragung einer Nachricht während einer "push-to-talk"-Verbindung
Procédé et système de communication pour le transfert d'un message pendant une connexion "push-to-talk"

(30) Priority: 12.01.2005 JP 2005005437
(43) Date of publication of application: 19.07.2006
(73) Proprietor: NEC Corporation, Minato-ku Tokyo 108-8001 (JP)
(72) Inventor: Umezawa,Yohei, Tokyo (JP); Toda, Yasushi, Tokyo (JP)
(74) Representative: Stork Bamberger

(56) References cited:
- WO-A2-2005/060501
- WO-A2-2005/065287
- US-A- 5 870 149
- US-A1- 2004 057 405

## Description

### FIELD OF THE INVENTION

The present invention relates to a communication method and a communication system, and more particularly, to a communication method and a communication system for performing PoC communication between a plurality of communication terminals through a PoC service providing server.

### BACKGROUND OF THE INVENTION

In recent years, with progress in communication technology, various communication systems have been developed. Among them is a system of communication using the PoC (Push-to-talk over Cellular) service (hereinafter referred to as "PoC communication"). The PoC service enables a voice chat between a plurality of users as well as increasing ARPU (Average Revenue Per User) while suppressing the effect of radio resource to minimum. The PoC service allows a user to simultaneously communicate with a plurality of other users, thereby providing the users with new style mobile communication, different from conventional one-to-one voice communication services. In other words, through the PoC service, high-speed communication can be performed between one-to-one users or a group of users, and also a mobile terminal can be used in the same manner as a transceiver.

Only by pressing a key or a button, a user can initiate communication using the PoC service without dialing, and easily access "member list" to select one or more other communication parties. When the user talks after one more push of the button, the voice of the user or caller is delivered to the other communication party or receiver. In addition, if the caller makes a group call, everyone on the member list can listen to his/ her message simultaneously as in a teleconference. Reference may be made to, for example, "Practical Use of IMS Solution Based on IP and SIP Technologies: Realization of New Multimedia Service Including Push-to-Talk on a Cellular Phone Packet Communication Network", NEC press release, March 8, 2004, <URL:http://www.nec.co.jp/press/ja/0403/0802.html>.

Through the PoC service, however, a user is not able to select a desired standard or preset voice message or sound to send it to the other party during a conversation.

A further example has been disclosed in patent document US 2004/0057405, which discloses a system and a method for providing group communication services, generally related to point-to-multipoint communication systems and more particularly to a method and apparatus for providing video, audio, image-data in a group communication network. The system and method for providing group communication services uses a communication device capable of generating data packets suitable for transmission over a data network such as the Internet. Rather than transmitting information using the traditional voice service mode, the communication device contains circuitry which accepts information such as audio, video or image-data, and converts the information into data packets in accordance with a data network protocol such as the well-known TCP/IP protocol. For this purpose, the communication device is preferably equipped with a push-to-talk capability, a video camera, a still camera, an audio device and a display. Thus, the communication device is able to receive external information and to send this external information over a data network. The data packets transmitted to a data network are then provided to a communications manager connected to the data network. The communication manager processes data packets that it receives from a first communication device and distributes the data packets in real-time to at least one other communication device that is a member of the same group. The communication manager acts as a configurable switch that is able to route communications from any group member to other group members defined by the group. In order to participate in group communications communication devices are each equipped with a means for requesting the transmission privilege from a communications manager. The communication manager manages the real-time and administrative operation of groups, including Push To Talk request arbitration. When a user of the communication device desires to transmit information, such as audio voice, to other group members, the push-to-talk switch located on his or her communication device is depressed, sending a request to obtain a transmission privilege from communication manager. After the requesting user has been granted the transmission privilege, the audio voice may then be transmitted from that user to the communication manager. For this purpose, the incoming voice of the user is converted into data packets using the communication device, whereas the data packets being suitable for the particular data network through which communications to other users take place. The communication manager then provides the information to the group members by selectively duplicating the information received from the communication device of said user and selectively sending a duplicate to the group members. If a single broadcast channel is used, the information need only be duplicated once for each broadcast channel in use. While the communication device holds the transmission privilege, the remaining group members are designated as listeners and correspondingly do not have permission to transmit information.

There has been proposed a service in which a user can send a standard voice message or sound to the other party during a conversation.

For example, Japanese Patent Application laid open No. 2001-251672 discloses a mobile phone capable of sending a prerecorded message to the other party when the user cannot directly talk on the phone.

However, although the mobile phone can be used for one-to-one communication, it cannot be used for the simultaneous transmission of a voice message to a plurality of other parties. In addition, differently from a transceiver, the mobile phone is not capable of swiftly switching between transmission and reception just by pushing a a button.

In the conventional PoC communication, when a user performs voice communication, he/ she has to speak or talk (utter a voice), which detracts from the usability of the PoC service for users. More specifically, in the case where the user is on the train, etc. and uncomfortable to have a vocal conversation or he/ she has difficulties in uttering a voice due to a disease such as laryngitis, tonsillitis or tooth decay, the PoC communication is not suitable for use.

That is, there is no communication method and system using a combination of the PoC service and a standard voice message or sound that can be transmitted during a conversation.

### SUMMARY OF THE INVENTION

It is therefore an object of the present invention to provide a communication method and a communication system capable of swiftly transmitting a standard or preset voice message or sound even during a conversation.

It is another object of the present invention to provide a communication method and a communication system capable of simultaneously transmitting a voice message to a plurality of other communication parties.

In accordance with the first aspect of the present invention, to achieve the object mentioned above, there is provided a communication method comprising the features according to claim 1. achieve the object mentioned above, there is provided a communication method comprising the features according to claim 1.

In accordance with the second aspect of the present invention, in the communication method of the first aspect, the standard sound has been downloaded from a standard sound providing server to the first communication terminal.

In accordance with the third aspect of the present invention, in the communication method of the first aspect, the standard sound has been recorded by the first user.

In accordance with the fourth aspect of the present invention, in the communication method of one of the first to third aspects, there are a plurality of second communication terminals.

In accordance with the fifth aspect of the present invention, in the communication method of the fourth aspect, the standard sound lasts for a prescribed period of time.

In accordance with the sixth aspect of the present invention, in the communication method of the fifth aspect, the standard sound includes a sound effect, someone's voice (e.g. celebrity's voice, cartoon character's voice, etc.), a phrase or lyric, music or melody, and the first user's own voice.

In accordance with the seventh aspect of the present invention, the communication method of the sixth aspect further comprises the steps of the first communication terminal displaying on the display screen the types of the standard sound and numbers assigned thereto, respectively, the first user operating a single button to select and transmit the standard sound of a desired type, and the first communication terminal transmitting the standard sound.

In accordance with the eighth aspect of the present invention, there is provided a communication system comprising the features according to claims 6.

In accordance with the ninth aspect of the present invention, in the communication system of the eighth aspect, the standard sound has been downloaded from a standard sound providing server to the communication terminal.

In accordance with the tenth aspect of the present invention, in the communication system of the eighth aspect, the standard sound has been recorded by the user of the communication terminal.

In accordance with the eleventh aspect of the present invention, in the communication system of one of the eighth to tenth aspects, the standard sound is transmitted to a plurality of other communication terminals.

In accordance with the twelfth aspect of the present invention, in the communication system of the eleventh aspect, the standard sound lasts for a prescribed period of time.

In accordance with the thirteenth aspect of the present invention, in the communication system of the twelfth aspect, the standard sound includes a sound effect, someone's voice, a phrase or lyric, music or melody, and the user's own voice.

In accordance with the fourteenth aspect of the present invention, in the communication system of the thirteenth aspect, the communication terminal displays on the display screen the types of the standard sound and numbers assigned thereto, respectively, and transmits the standard sound that the user has selected by operating a single button.

As is described above, in accordance with the present invention, a user can swiftly send a standard voice message or sound previously stored in his/ her communication terminal to one or more other communication parties even during a conversation. Thus, the other communication parties who join the conversation with the user can listen to the message or sound instead of the user's own voice. Further, when there are a plurality of other communication parties, a voice message can be simultaneously sent thereto.

### BRIEF DESCRIPTION OF THE DRAWINGS

The exemplary aspects and features of the present invention will become more apparent from the consideration of the following detailed description taken in conjunction with the accompanying drawings in which:
Fig. 1 is a functional block diagram showing a communication terminal used in a communication system according to an embodiment of the present invention;
Fig. 2 is a diagram for explaining the downloading of standard voice message or sound data to the communication terminal depicted in Fig. 1;
Fig. 3 is a diagram showing an example of a display on the display screen of the communication terminal depicted in Fig. 1;
Fig. 4 is a diagram showing an example of the case where a sound effect is simultaneously transmitted as standard sound from the communication terminal depicted in Fig. 1 to a plurality of the other communication terminals;
Fig. 5 is a diagram showing an example of the case where a phrase is simultaneously transmitted as standard sound from the communication terminal depicted in Fig. 1 to a plurality of the other communication terminals; and
Fig. 6 is a diagram showing an example of the case where music or melody is simultaneously transmitted as standard sound from the communication terminal depicted in Fig. 1 to a plurality of the other communication terminals.

### DESCRIPTION OF THE PREFERRED EMBODIMENT

Referring now to the drawings, a description of a preferred embodiment of the present invention will be given in detail.

A communication system according to an embodiment of the present invention comprises a plurality of communication terminals capable of PoC communication and a PoC service providing server used for PoC communication between the plurality of communication terminals.

The communication system and a method thereof are characterized in that PoC communication is performed between a plurality of communication terminals through the PoC service providing server. The communication method and system allow a user to swiftly send a standard or preset voice message or sound from his/ her communication terminal to one or more other communication parties even during a conversation on the terminal. Thus, the other communication parties who join the conversation with the user can listen to the message or sound instead of the user's own voice.

The standard sound may be downloaded to the communication terminal from a standard sound providing server on a network connected to the terminal. In this case, the user can select a desired standard sound from the standard sound providing server, and then store it in the communication terminal.

The standard sound may be recorded by the user of the communication terminal. In this case, the communication terminal can transmit as the standard sound the user's own voice and also other types of sound (animal or bird call, machinery murmur such as engine noise, nature sounds such as river streams and ocean waves, etc.) to one or more other communication terminals.

The communication terminal may simultaneously transmit the standard sound to a plurality of other communication terminals.

The standard sound may last for a prescribed period of time. In this case, the user can talk after the prescribed period of time, the standard sound can be transmitted after the talk of the user, or only the standard sound can be transmitted.

The standard sound may include a sound effect, a phrase or lyric in someone's voice (celebrity's voice, cartoon character's voice, etc.), music or melody, and a message in the user's own voice or synthesized voice. In this case, the communication terminal can transmit any type of the standard sound.

The communication terminal may display on the display screen the types of the standard sound and numbers assigned thereto, respectively, so that the user can select and transmit the standard sound of a desired type by operating a single button. In this case, the standard sound can be inserted into the arbitrary point: the beginning, middle or end of a PoC conversation.

That is, the communication method and system of this embodiment enable the PoC service in which a user can send "standard sound", such as a sound effect, someone's voice or music, previously stored in a PoC communication terminal to one or more other communication parties. Thus, the other communication parties who join the PoC conversation can listen to the standard sound instead of the user's own voice.

The communication method and system of this embodiment can be implemented by providing a PoC communication terminal with the function of transmitting standard sound. Since the user can download the standard sound for use in communication to the PoC communication terminal, it is possible to broaden the user options.

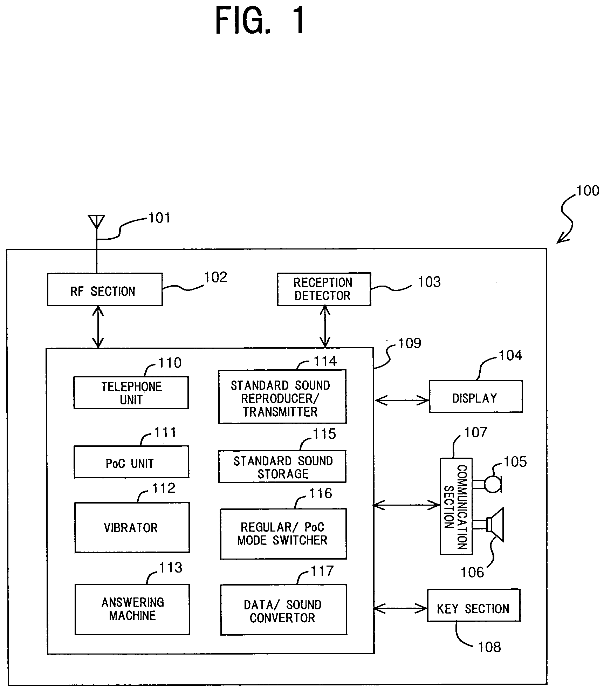

In the following, a description will be given of the construction of the communication terminal used in the communication system of this embodiment. Fig. 1 is a functional block diagram showing the communication terminal used in the communication system of this embodiment. In this embodiment, a cellular phone is employed as the communication terminal by way of example. As can be seen in Fig.1, the cellular phone 100 as the communication terminal comprises an antenna 101, an RF (Radio Frequency) section 102, a reception detector 103, a display 104, a microphone 105, a speaker 106, a communication section 107, a key section 108, and a functional section 109. Incidentally, a power source is not shown in the drawing.

The antenna 101 transmits and receives radio waves. The RF section 102 amplifies radio waves from the antenna 101 as well as feeding power to the antenna 101. The reception detector 103 determines whether or not radio waves have been received from other communication terminals. The display 104 displays characters, text, images and the like. The communication section 107 drives or activates the microphone 105 and the speaker 106. The key section 108 includes numeric keys and buttons such as "Enter" and "Menu", and is used by the user to provide input.

The antenna 101 may be a rod antenna, a whip antenna, a patch antenna, a loop antenna or the like. As the display 104, for example, a liquid crystal display (LCD) may be employed.

The functional section 109 includes a telephone unit 110, a PoC unit 111, a vibrator 112, an answering machine 113, a standard sound reproduced transmitter 114, a standard sound storage 115, a regular/ PoC mode switcher 116, and a data/ sound converter 117.

The telephone unit 110 has a function for a regular conversation, while the PoC unit 111 has a function for a PoC conversation. The vibrator 112 is activated and vibrates on receipt of an incoming call or the like. The standard sound storage 115 stores standard sound downloaded or recorded by the user. The regular/ PoC mode switcher 116 switches the cellular phone 100 between regular conversation mode and PoC conversation mode. The data/ sound converter 117 converts the standard sound data stored in the standard sound storage 115 to sound.

A mobile phone carrier or an ASP (Application Service Provider) manages a server that stores standard sound data available for users through this service. The server may be provided on an Internet Web site. Each user can access the server to download desired sound data for use in communication.

The cellular phone 100, which is compatible with PoC and provided with the function of transmitting standard sound, is connected to a mobile phone network. In the cellular phone 100, the user previously stores desired standard sound data, and a number is assigned to each of the sound data so that the user can select an item of the standard sound type by the number.

Incidentally, the "standard sound" as used herein indicates any type of sound including a sound effect, a phrase or lyric in someone's voice, music or melody, and a message in the user's own voice or synthesized voice.

Examples of sound effects includes clap track (clap-clap!), booing sound (boo-boo!), sound for a correct answer to a quiz question (ding-ding!), sound for a wrong answer to a quiz question (beep-beep!), cartoon character's voice or dubbing artist's voice (I'm ...), singer's voice (too bad!), and music (Beethoven's Fifth symphony "Fate").

Besides, the standard sound may be a message in the user's own voice, as, for example, follows: "I'm sorry. I've lost my voice due to having swollen tonsils. Please send me your message by email." for the occasion when the user cannot speak due to tonsillitis; or "Hello. I've got over my swollen tonsils now. I appreciate your help." for the occasion when the user has recovered from tonsillitis. The standard sound may last for a prescribed period of time, preferably a psychologically tolerable period, such as five seconds for a sound effect, a bar of music, and 20 seconds for a message in the user's voice. With the standard sound set to a fixed length, the user can talk after the transmission of the standard sound. Besides, the standard sound can be transmitted after the talk of the user, or only the standard sound can be transmitted.

As other examples of messages in the user's own voice may be cited as follows:
"This is Xxxxxxxx. I'm afraid I'm lost. Could you please tell me how to get to ###### Street." for the occasion when the user is lost, and "This is Xxxxxxxx. I've found my way to ###### Street. I appreciate your help" for the occasion when the user has found the way to his/ her destination;
"This is Xxxxxxxx. My son is missing. If you have any information, please call me or email me. He is five years old, dark blond hair, blue eyes, ...." for the occasion of requesting to search for a missing child (a still or moving image of the child may be transmitted together with the message as the standard sound), and "This is Xxxxxxxx. My son has returned home safe and sound. I appreciate your help". for the occasion when the lost child is found;
"This is Xxxxxxxx. My cat is missing. If you have any information, please call me or email me. She is an all white Angora cat and she is about 2 years old, ...." for the occasion of requesting to search for a missing pet (a still or moving image of the pet may be transmitted together with the message as the standard sound); or "This is Xxxxxxxx. My cat has made it back home safely. I appreciate your help". for the occasion when the lost pet is found; and
"This is Xxxxxxxx. I'm arranging a party at one of our favorite restaurants. $20 for participation. Please let me know by email no later than next Friday what day between March 10 - 15th is most convenient for you and whether you will come or not." for the occasion when the user is to hold a party, and "This is Xxxxxxxx. The party is to be held at ###### restaurant on Saturday March 14th at 6:30 pm" for the occasion when the party has been scheduled (a map showing the way to the party place, a picture of the interior thereof or a moving image may be transmitted together with the message as the standard sound).

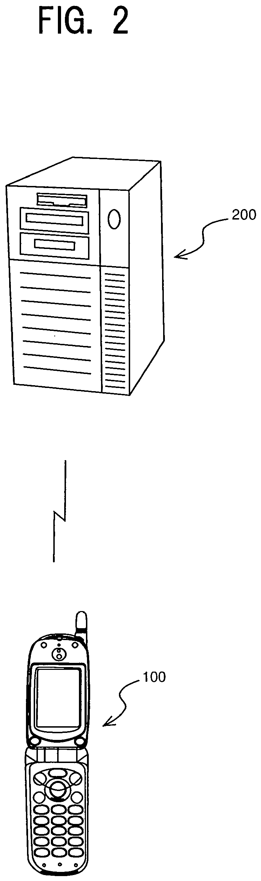

In the following, the operation of the communication system of this embodiment will be described referring to Figs. 2 to 6.

Fig. 2 is a diagram for explaining the downloading of standard voice message or sound data to the communication terminal depicted in Fig. 1.

### [Presetting]

When using a standard sound providing server 200 on a Web site that offers standard sound download service (see Fig. 2), the user first accesses the server 200 to download standard sound data to the cellular phone 100 as the communication terminal (see Fig. 1). The cellular phone 100 stores the downloaded standard sound data in the standard sound storage 115 (see Fig. 1).

Next, the user operates the key section 108 (see Fig. 1) to assign a number to the standard sound data stored in the standard sound storage 115 so that he/ she can select and reproduce the standard sound by the number. In other words, the user associates a menu item corresponding to the number with the standard sound by operating the key section 108.

The user may skip the above process when the standard sound data have been previously stored in the cellular phone 100, and a number has already been assigned to each of them.

When not using the standard sound providing server 200, the user inputs voice or sound as standard sound to the cellular phone 100 through the microphone 105. The sound is converted to an electrical or digital signal, and thereafter, stored in the standard sound storage 115. The user assigns a number to the standard sound and associates a menu item corresponding to the number with the sound by operating the key section 108.

### [Use of Standard sound During PoC Conversation]

The user of the cellular phone 100 operates the key section 108 to activate the regular/ PoC mode switcher 116. The regular/ PoC mode switcher 116 switches the cellular phone 100 from regular conversation mode to PoC conversation mode, thereby activating the PoC unit 111. Once the PoC unit 111 is activated, the indication of "PoC MODE" is displayed on the display 104 of the cellular phone 100.

After switching the cellular phone 100 to the PoC conversation mode, the user (hereinafter referred to as "PoC user") establishes a PoC session with the users of cellular phones 100-1 to 100-N, who have switched their cellular phones 100-1 to 100-N to the PoC conversation mode (hereinafter referred to as "PoC members").

The PoC user who joins the PoC session presses a PoC talk button or a Push to Talk key (not shown) in the key section 108 to obtain the right to speak. When the PoC user is talking, his/ her voice is output from the cellular phones 100-1 to 100-N of the PoC members who has not pressed the PoC talk button.

The above description is of the process of a PoC conversation between the PoC user and PoC members through the regular PoC service.

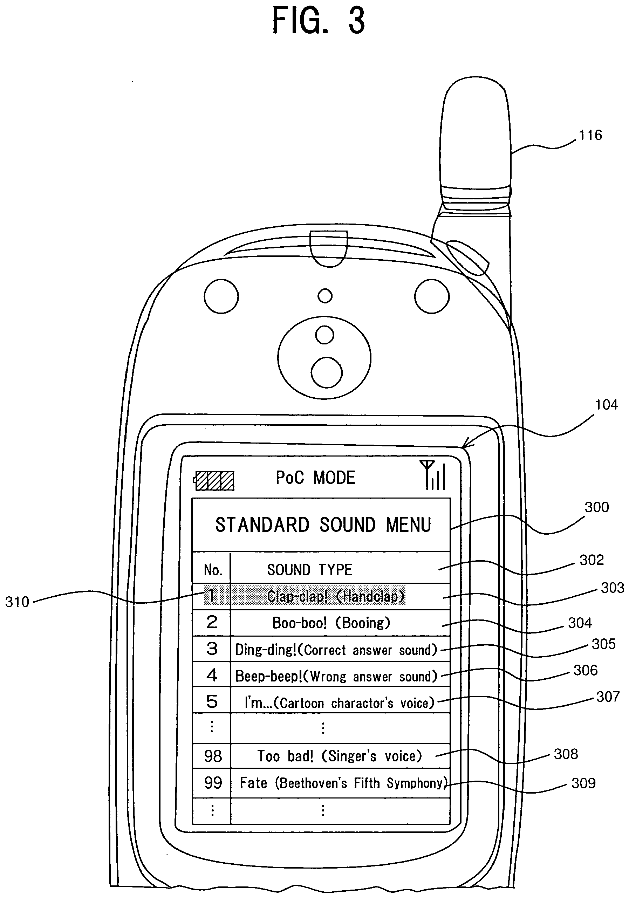

Fig. 3 is a diagram showing an example of a display on the display 104 of the cellular phone 100.

When reproducing desired standard sound, the PoC user, who has pressed the PoC talk button of the cellular phone 100 to obtain the right to speak, presses and manipulates a scroll button (not shown) while pressing the PoC talk button to move a cursor 310. The PoC user positions the cursor 310 on a desired item (a number and a sound type) on the standard sound menu 300 displayed on the display 104 using the scroll button to select the item. Then, the PoC user presses a standard sound playback button (not shown) for reproducing the desired standard sound while the cursor 310 is residing on the item (e.g. key No. 1: Handclap).

The PoC user may press one or more of numeric keys 0 to 9 (not shown) in the key section 108, instead of using the scroll button, to select the desired standard sound to be transmitted. In this case, a number has been previously assigned to each of the standard sound data, and the PoC user inputs a number corresponding to the desired standard sound using the numeric keys 0 to 9.

When the PoC user presses the standard sound playback button while pressing the PoC talk button, the cellular phone 100 reproduces the standard sound stored in the standard sound storage 115. Thereby, the PoC user can listen to the standard sound, and at the same time, the standard sound is transmitted to the cellular phones 100-1 to 100-N of the PoC members instead of the PoC user's voice through a PoC service providing server 400.

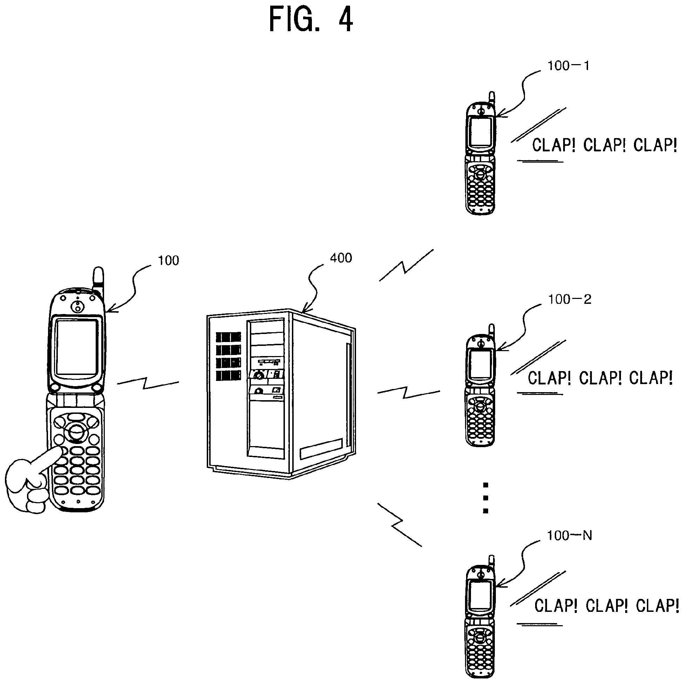

Fig. 4 is a diagram showing an example of the case where a sound effect (clap track) is simultaneously transmitted as standard sound from the cellular phone 100 to the cellular phones 100-1 to 100-N. As can be seen in Fig. 4, having received the standard sound from the cellular phone 100, the cellular phones 100-1 to 100-N simultaneously output the standard sound (clap track) "clap-clap!".

That is, the PoC user can swiftly send a standard voice message or sound to the PoC members even during a conversation. Thus, the PoC members who join the conversation with the PoC user can listen to the standard sound instead of the PoC user's own voice through the cellular phones 100-1 to 100-N. In addition, the voice message can be simultaneously sent to the plurality of the cellular phones 100-1 to 100-N.

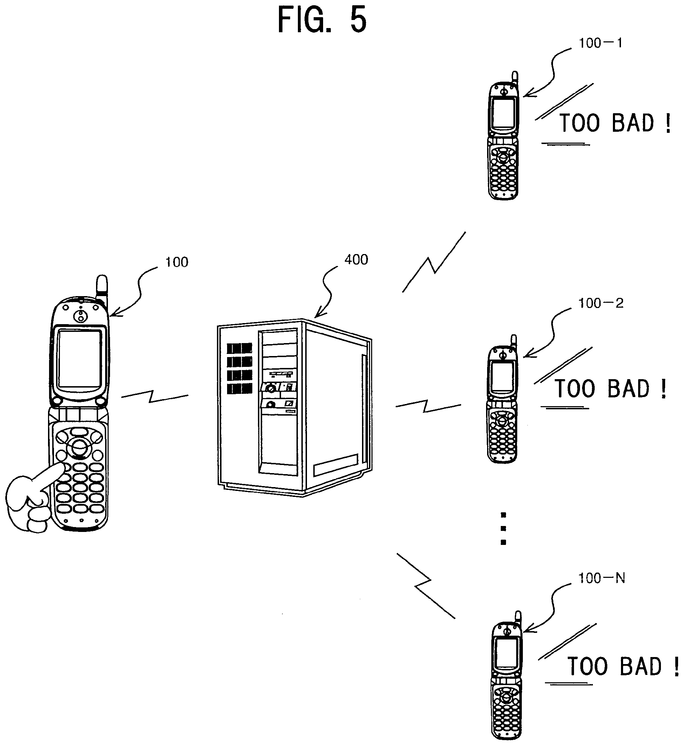

Fig. 5 is a diagram showing an example of the case where a phrase is simultaneously transmitted as standard sound from the cellular phone 100 to the cellular phones 100-1 to 100-N.

If the PoC user wishes to send the PoC members a phrase in, for example, celebrity's voice, he/ she presses and manipulates the scroll button while pressing the PoC talk button to position the cursor 310 on a desired item (e.g. key No. 98: Singer's voice) on the standard sound menu 300 displayed on the display 104 to select the item. Then, the PoC user presses the standard sound playback button while the cursor 310 is residing on the item. Accordingly, the cellular phone 100 reproduces and transmits the standard sound (too bad!) corresponding to the menu item.

In other words, when the PoC user presses the standard sound playback button while pressing the PoC talk button, the cellular phone 100 reproduces the selected standard sound stored in the standard sound storage 115. Thereby, the PoC user can listen to the desired standard sound, and at the same time, the standard sound is transmitted to the cellular phones 100-1 to 100-N of the PoC members instead of the PoC user's voice through a PoC service providing server 400.

As can be seen in Fig. 5, having received the standard sound from the cellular phone 100, the cellular phones 100-1 to 100-N simultaneously output the standard sound (Singer's voice) "too bad!".

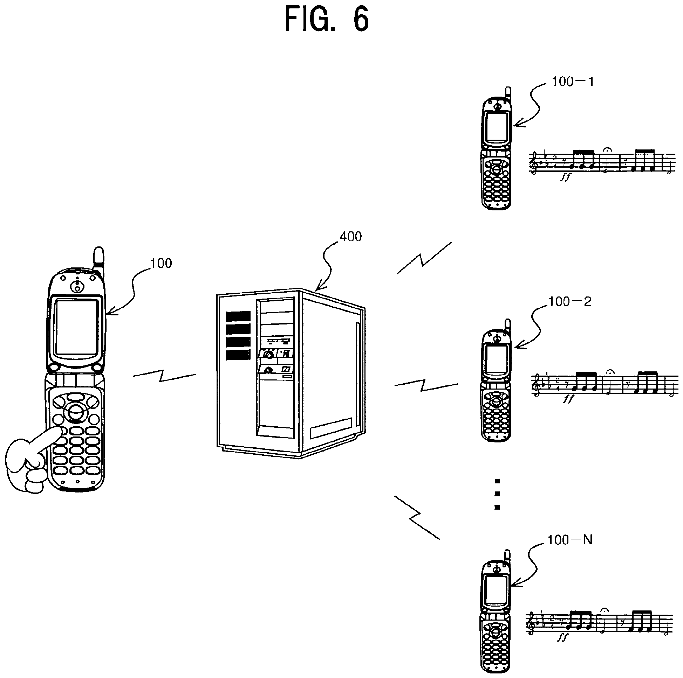

Fig. 6 is a diagram showing an example of the case where music or melody is simultaneously transmitted as standard sound from the cellular phone 100 to the cellular phones 100-1 to 100-N.

In the same manner as previously described, if the PoC user wishes to send the PoC members music, he/ she presses and manipulates the scroll button while pressing the PoC talk button to position the cursor 310 on a desired item (e.g. key No. 99: Fate) on the standard sound menu 300 displayed on the display 104 to select the item. Then, the PoC user presses the standard sound playback button while the cursor 310 is residing on the item. Accordingly, the cellular phone 100 reproduces and transmits the standard sound (melody of Beethoven's Fifth) corresponding to the menu item.

In other words, when the PoC user presses the standard sound playback button while pressing the PoC talk button, the cellular phone 100 reproduces the selected standard sound stored in the standard sound storage 115. Thereby, the PoC user can listen to the desired standard sound, and at the same time, the standard sound is transmitted to the cellular phones 100-1 to 100-N of the PoC members instead of the PoC user's voice through a PoC service providing server 400.

As can be seen in Fig. 6, having received the standard sound from the cellular phone 100, the cellular phones 100-1 to 100-N simultaneously output the standard sound (Beethoven's Fifth "Fate") for a prescribed period of time.

Incidentally, the PoC user can prevent any of the cellular phones 100-1 to 100-N from outputting standard sound by operating the key section 108 when transmitting the standard sound. Besides, if the PoC user repeatedly presses the standard sound playback button, the cellular phones 100 repeat the output of standard sound.

If a user or a member presses the standard sound playback button when all the cellular phones 100 are in the PoC talk idle state, or no user or member currently has the right to speak, the cellular phone 100 of the user first obtains the right to speak, and then reproduces and transmits standard sound. In this case, if the user continues to press the standard sound playback button, he/ she can talk subsequent to the transmission of the standard sound.

As set forth hereinabove, in accordance with the present invention, a PoC user can talk and also send PoC members "standard sound", including a sound effect, a phrase or lyric in someone's voice (celebrity's voice, cartoon character's voice, etc.), and music or melody, even during a PoC conversation. Thus, the PoC members can listen to the standard sound in addition to the PoC user's talk. The standard sound may be referred to as the audio version of "emoticon" in email or instant message services. The standard sound can enhance enjoyment in the PoC communication only by voice, which is likely to be plain and monotonous.

Further, even in the case where the user is on the train and uncomfortable to have a vocal conversation, he/ she has difficulties in uttering a voice due to tonsillitis, etc., or he/ she is in an emergency, he/ she can perform simple voice communication just by pressing keys or buttons.

This function enables the user to carry out voice communication through the use of only the standard sound and without the utterance of a single word.

Since the user can download desired standard sound data for use in communication from the standard sound providing server, he/ she can store a wide variety of standard sound data in his/ her communication terminal. Consequently, the standard sound can be used in infinitely different ways depending on the idea of the user.

In addition, an increase can be expected in the profits of the service provider due to the higher value-added PoC service and standard sound download service.

The service, which allows a user to send a standard voice message or sound to the other party during a conversation, is not suitable for regular telephone communication because of the characteristic thereof (full-duplex form of communication), but is suitable for the PoC communication. In the PoC communication, each user of a communication terminal talks after obtaining the right to speak by pressing
a key or a button as with a transceiver (half-duplex form of communication), and standard sound can be exchanged properly between communication terminals.

That is, the PoC service offers one-to-many group communication in which a plurality of members can simultaneously listen to a message from another member. Therefore, the communication method and system of the present invention is highly advantageous to the PoC service.

The communication method and system of the present invention can be applied to a cellular phone, a PDA (Personal Digital Assistant), a PC (Personal Computer), and the like.

While the present invention has been described with reference to the particular illustrative embodiment, it is not to be restricted by the embodiment but only by the appended claims.

## Claims

1. A communication method for performing Push-to-talk over Cellular communication between a plurality of communication terminals (100) through a Push-to-talk over Cellular service providing server (400), the method comprising the steps of:
storing previously a standard sound in a first communication terminal of a first user;
transmitting from said first communication terminal (100) said standard sound to a second communication terminal (100) of a second user who joins a conversation with the first user and listens to said standard sound instead of the first user's own voice, wherein
in case a standard sound playback button of the first communication terminal (100) of the plurality of communication terminals (100) is pressed when all the communication terminals (100) are in a Push-to-talk idle state or none of the users has the right to speak,
the first communication terminal (100) first obtains the right to speak and then reproduces and transmits the standard sound.

2. The communication method claimed in claim 1, wherein the standard sound has been downloaded from a standard sound providing server (114) to the first communication terminal (100) and/or recorded by the first user.

3. The communication method claimed in claim 1 or 2, wherein the standard sound lasts for a prescribed period of time.

4. The communication method claimed in claim 3, wherein the standard sound includes a sound effect, human voice, synthesized voice, a message, a phrase, a lyric, music.

5. The communication method claimed in claim 4 further comprising the steps of:
displaying on the display screen (104) of the first communication terminal (100) the type of standard sound and a key number assigned to said type of standard sound;
making the first user operate a single button to select the standard sound of a desired type to be transmitted; and
transmitting from the first communication terminal (100) the standard sound.

6. A communication system comprising:
a plurality of communication terminals (100) capable of Push-to-talk over Cellular communication, each of said communication terminals (100) including:
storing means (115) for storing previously a standard sound by a user of a first communication terminal (100); and
transmitting means (101) for transmitting the standard sound to one or more other communication terminals (100), wherein one or more other communication parties or said other communication terminals (100) join a conversation with said user and listen to the standard sound instead of said user's own voice; and
a Push-to-talk over Cellular service providing server (400) used for Push-to-talk over Cellular communication between the communication terminals (100),
wherein
the first communication terminal (100) is adapted to first obtain the right to speak and then to reproduce and to transmit the standard sound
in case a standard sound playback button of the first communication terminal (100) of the plurality of communication terminals (100) is pressed
when all the communication terminals (100) are in a Push-to-talk idle state or none of the users has the right to speak.

7. The communication system claimed in claim 6, wherein the standard sound has been downloaded from a standard sound providing server (400) to the first communication terminal (100) and/or recorded by the user.

8. The communication system claimed in claim 6 or 7, wherein the standard sound lasts for a prescribed period of time.

9. The communication system claimed in claim 8, wherein the standard sound includes a sound effect, human voice, synthesized voice, a message, a phrase, a lyric, music.

10. The communication system claimed in claim 9, wherein:
the communication terminal (100) further includes display means (104) for displaying the type of standard sound and a key number assigned to said type of standard sound; and
inputting means (108) for selecting by the user the standard sound of a desired type to be transmitted.

## Patentansprüche

1. Kommunikationsverfahren zum Durchführen von Gesprächsübergabe über Zellularkommunikation zwischen einer Mehrzahl Kommunikationsendgeräte (100) durch einen Gesprächsübergabe-über-Zellulardienstleistungsserver, wobei das Verfahren folgende Schritte umfasst:
vorheriges Speichern eines Standardklangs in einem ersten Kommunikationsendgerät eines ersten Nutzers;
Senden des Standardklangs von dem ersten Kommunikationsendgerät (100) an ein zweites Kommunikationsendgerät (100) eines zweiten Nutzers, der einer Unterhaltung mit dem ersten Nutzer beitritt und den Standardklang anstelle der eigenen Stimme des ersten Nutzers hört, wobei
im Fall, dass eine Standardklang-Wiedergabetaste des ersten Kommunikationsendgeräts (100) der Mehrzahl Kommunikationsendgeräte (100) gedrückt wird, wenn sich alle Kommunikationsendgeräte (100) in einem Gesprächsübergabe-Ruhezustand befinden oder keiner der Nutzer das Recht zu sprechen hat, das erste Kommunikationsendgerät (100) zuerst das Recht zu sprechen erhält und dann den Standardklang reproduziert und sendet.

2. Kommunikationsverfahren nach Anspruch 1, wobei der Standardklang von einem Standardklangbereitstellserver (114) an das erste Kommunikationsendgerät (100) heruntergeladen und/oder von dem ersten Nutzer aufgezeichnet wurde.

3. Kommunikationsverfahren nach Anspruch 1 oder 2, wobei der Standardklang eine vorgeschriebene Zeitdauer lang andauert.

4. Kommunikationsverfahren nach Anspruch 3, wobei der Standardklang einen Klangeffekt, menschliche Stimme, synthetisierte Stimme, eine Nachricht, eine Phrase, einen Liedtext, Musik umfasst.

5. Kommunikationsverfahren nach Anspruch 4, weiterhin umfassend folgende Schritte:
Anzeigen der Art des Standardklangs und einer Kennziffer, die der Art des Standardklangs zugewiesen ist, auf dem Anzeigeschirm (104) des ersten Kommunikationsendgeräts (100);
Bewirken, dass der erste Nutzer eine einzelne Taste betätigt, um den Standardklang der gewünschten zu übertragenden Art auszuwählen; und
Übertragen des Standardklangs von dem ersten Kommunikationsendgerät (100).

6. Kommunikationssystem, umfassend:
eine Mehrzahl Kommunikationsendgeräte (100), die zur Gesprächsübergabe über Zellularkommunikation tauglich sind, wobei jedes der Kommunikationsendgeräte (100) umfasst:
Speichermittel (115) zum vorherigen Speichern eines Standardklangs durch einen ersten Nutzer eines ersten Kommunikationsendgeräts (100); und
Sendemittel (101) zum Senden des Standardklangs an ein oder mehrere Kommunikationsendgeräte (100), wobei ein oder mehrere Kommunikationsteilnehmer oder die anderen Kommunikationsendgeräte (100) einer Unterhaltung mit dem Nutzer beitreten und den Standardklang anstelle der eigenen Stimme des ersten Nutzers hören; und
einen Gesprächsübergabe-über-Zellulardienstleistungsserver, der für Gesprächsübergabe über Zellularkommunikation zwischen einer Mehrzahl Kommunikationsendgeräte (100) verwendet wird, wobei
das erste Kommunikationsendgerät (100) eingerichtet ist, um
im Fall, dass eine Standardklang-Wiedergabetaste des ersten Kommunikationsendgeräts (100) der Mehrzahl Kommunikationsendgeräte (100) gedrückt wird,
wenn sich alle Kommunikationsendgeräte (100) in einem Gesprächsübergabe-Ruhezustand befinden oder keiner der Nutzer das Recht zu sprechen hat,
zuerst das Recht zu sprechen zu erhalten und dann den Standardklang zu reproduzieren und zu senden.

7. Kommunikationssystem nach Anspruch 6, wobei der Standardklang von einem Standardklangbereitstellserver (400) an das erste Kommunikationsendgerät (100) heruntergeladen und/oder von dem Nutzer aufgezeichnet wurde.

8. Kommunikationssystem nach Anspruch 6 oder 7, wobei der Standardklang eine vorgeschriebene Zeitdauer lang andauert.

9. Kommunikationssystem nach Anspruch 8, wobei der Standardklang einen Klangeffekt, menschliche Stimme, synthetisierte Stimme, eine Nachricht, eine Phrase, einen Liedtext, Musik umfasst.

10. Kommunikationssystem nach Anspruch 9, wobei das Kommunikationsendgerät (100) weiterhin
Anzeigemittel (104) zum Anzeigen der Art des Standardklangs und einer Kennziffer, die der Art des Standardklangs zugewiesen ist; und
Eingabemittel (108) zum Auswählen des Standardklangs einer gewünschten zu übertragenden Art durch den Nutzer
umfasst.

## Revendications

1. Procédé de communication pour réaliser une messagerie instantanée vocale sur une communication cellulaire entre une pluralité de terminaux de communication (100) par l'intermédiaire d'un serveur de fourniture de messagerie instantanée vocale sur service cellulaire (400), le procédé comprenant les étapes de :
stockage au préalable d'un son standard dans un premier terminal de communication d'un premier utilisateur ;
transmission à partir dudit premier terminal de communication (100) dudit son standard à un second terminal de communication (100) d'un second utilisateur qui rejoint une conversation avec le premier utilisateur et écoute ledit son standard au lieu de la propre voix du premier utilisateur, dans lequel
dans le cas où un bouton de lecture de son standard du premier terminal de communication (100) de la pluralité de terminaux de communication (100) est enfoncé lorsque tous les terminaux de communication (100) sont dans un état de repos de messagerie instantanée vocale ou qu'aucun des utilisateurs n'a le droit de parler,
le premier terminal de communication (100) obtient le premier le droit de parler puis reproduit et transmet le son standard.

2. Procédé de communication selon la revendication 1, dans lequel le son standard a été téléchargé depuis un serveur de fourniture de son standard (114) dans le premier terminal de communication (100) et/ou enregistré par le premier utilisateur.

3. Procédé de communication selon la revendication 1 ou 2, dans lequel le son standard dure une période de temps prescrite.

4. Procédé de communication selon la revendication 3, dans lequel le son standard inclut un effet de son, une voix humaine, une voix synthétisée, un message, une expression, des paroles, de la musique.

5. Procédé de communication selon la revendication 4, comprenant en outre les étapes de :
affichage sur l'écran d'affichage (104) du premier terminal de communication (100) du type de son standard et d'un numéro clé assigné audit type de son standard ;
fait d'amener le premier utilisateur à actionner un bouton unique pour sélectionner le son standard d'un type souhaité à transmettre ; et
transmission du son standard à partir du premier terminal de communication (100).

6. Système de communication comprenant :
une pluralité de terminaux de communication (100) capables de messagerie instantanée vocale sur une communication cellulaire, chacun desdits terminaux de communication (100) incluant :
un moyen de stockage (115) destiné à stocker au préalable un son standard par un utilisateur d'un premier terminal de communication (100) ; et
un moyen de transmission (101) destiné à transmettre le son standard à un ou plusieurs autres terminaux de communication (100), dans lequel un ou plusieurs autres correspondants ou lesdits autres terminaux de communication (100) rejoignent une conversation avec ledit utilisateur et écoute le son standard au lieu de la propre voix dudit utilisateur ; et
un serveur de fourniture de messagerie instantanée vocale sur service cellulaire (400) utilisé pour une messagerie instantanée vocale sur communication cellulaire entre les terminaux de communication (100),
dans lequel,
le premier terminal de communication (100) est adapté pour obtenir le premier le droit de parler puis de reproduire et de transmettre le son standard
dans le cas où un bouton de lecture de son standard du premier terminal de communication (100) de la pluralité de terminaux de communication (100) est enfoncé lorsque tous les terminaux de communication (100) sont dans un état de repos de messagerie instantanée vocale ou qu'aucun des utilisateurs n'a le droit de parler.

7. Système de communication selon la revendication 6, dans lequel le son standard a été téléchargé depuis un serveur de fourniture de son standard (400) dans le premier terminal de communication (100) et/ou enregistré par l'utilisateur.

8. Système de communication selon la revendication 6 ou 7, dans lequel le son standard dure une période de temps prescrite.

9. Système de communication selon la revendication 8, dans lequel le son standard inclut un effet de son, une voix humaine, une voix synthétisée, un message, une expression, des paroles, de la musique.

10. Système de communication selon la revendication 9, dans lequel :
le terminal de communication (100) inclut en outre un moyen d'affichage (104) destiné à afficher le type de son standard et un numéro clé assigné audit type de son standard ;
un moyen d'entrée (108) destiné à sélectionner par l'utilisateur le son standard d'un type souhaité à transmettre.
